# EUROPÄISCHE PATENTSCHRIFT

(11) **EP 2 634 496 B1**
(45) Veröffentlichungstag und Bekanntmachung des Hinweises auf die Patenterteilung: **16.12.2015**
(21) Anmeldenummer: 13001016.8
(22) Anmeldetag: 28.02.2013
(51) Int. Cl.: F24F 3/14, F24F 7/08, F24F 3/00, F24F 7/00, F24F 12/00, B65H 75/24

(54) **Lüftungseinrichtung**
Ventilation device
Dispositif d'aération

(30) Priorität: 29.02.2012 AT 782012
(43) Veröffentlichungstag der Anmeldung: 04.09.2013
(73) Patentinhaber: Aschauer, Johann, 4362 Bad Kreuzen (AT)
(72) Erfinder: Aschauer, Johann, 4362 Bad Kreuzen (AT)
(74) Vertreter: Dupal, Helmut

(56) Entgegenhaltungen:
- WO-A1-03/098120
- WO-A1-2005/045325
- DE-A1- 3 613 942
- DE-A1-102010 002 198
- FR-A1- 2 870 326
- US-A- 3 988 900
- US-A1- 2011 056 384

## Beschreibung

Die Erfindung betrifft eine Lüftungseinrichtung mit den Merkmalen des Oberbegriffes des Anspruches 1.

Eine Lüftungseinrichtung dieser Art ist beispielsweise aus der Druckschrift US 2011/0056384 A1 bekannt.

Diese Druckschrift offenbart eine Lüftungseinrichtung den Luftwechsel von Räumen, mit je zwei Luftleitungen, die an je einen Raum oder je eine Raumgruppe über je eine Luftöffnung angeschlossen sind, die im Wesentlichen vertikal verlaufenden Lüftungsstrang bestehen, wobei jede Luftleitung mit einer Rekuperationsanordnung versehen ist, die wenigstens einen Austauscher für Wärme und Luftfeuchte, und einen Ventilator umfasst, an dessen Rekuperationskapazität der Rekuperationszyklus und damit die Laufzeit des Ventilators an die erforderliche Rekuperationsleistung angepasst ist.

Bekannte Lüftungseinrichtungen, besonders für innenliegende Räume, etwa für Bäder, bestehen aus im wesentlichen vertikal verlaufenden Lüftungssträngen mit Luftleitungen, die jeweils mit einer Lüftungsöffnung an einen Raum angeschlossen sind, mit denen die erwärmte feuchte Luft nach oben über Dach abgeleitet wird und Frischluft von unten, mit einer eigenen Öffnung aus dem Kellergeschoss oder von außen zugeführt wird, wobei der jeweils zugeordnete Lüftungsstrang zwischen den beiden Lüftungsöffnungen des belüfteten Raumes unterbrochen, gewöhnlich abgemauert, ist. Die auftretenden Wärmeverluste sind bei dieser Anordnung beträchtlich und durch von unten eintretende kalte Luft von außen können unangenehm niedrige Temperaturen auftreten oder sogar Kondensation von Luftfeuchte in Wohnräumen erfolgen.

Bei einem anderen Weg der Belüftung, von an Außenwänden liegenden Räumen, wird ein kurzer durch die Außenwand geführter Lüftungsstrang verwendet, der mit einem Austauscher für Wärme und Luftfeuchte und einem Ventilator ausgestattet ist. Dieser wird nach jeweiliger Beladung oder Entladung des Austauschers in kurzen, 1 bis 2 minütigen, Abständen in der Laufrichtung umgeschaltet. Bei dieser Anordnung kann die Geräuschentwicklung durch den Ventilator unangenehme Belastungen erzeugen.

Aufgabe der Erfindung ist es eine Lüftungseinrichtung zu schaffen, bei der die angeführten Nachteile vermieden werden und die Belüftung mit Luftleitungen von Lüftungssträngen, für jeweiols einen oder auch für mehre Räume, mit geringem zusätzlichen Aufwand herzustellen.

Diese Aufgabe wird bei einer der eingangs genannten Art, nach dem Oberbegriff des Anspruches 1, mit den Merkmalen des kennzeichnenden Teiles des Anspruches 1 gelöst. Die Unteransprüche betreffen besonders vorteilhafte Ausgestaltungen der Erfindung und bilden ebenso wie Anspruch 1 gleichzeitig einen Teil der Beschreibung der Erfindung.

Lüftungseinrichtung für den Luftwechsel von Räumen, wie insbesondere von Bädern in mehrgeschossigen Gebäuden, mit je zwei Luftleitungen, die im besonderen aus einem einzigen im Wesentlichen vertikal verlaufenden, im Bereich des belüften Raumes angeordneten Lüftungsstranges bestehen, wobei ein Raum oder eine Raumgruppe über je eine Luftöffnung an diese angeschlossen ist stellen eine sehr einfache und sparsame Gestaltung eines wesentlichen Teiles der erfinderischen Lüftungseinrichtung dar.

Eine sehr Wesentliche Vereinfachung jeder Luftleitung wird dabei mit einer Rekuperationsanordnung erreicht, bei der wenigstens ein Austauscher für Wärme und Luftfeuchte und ein Ventilator vorgesehen ist, deren Rekuperationszyklus und damit die Laufzeit des Ventilators in eine Förderrichtung an die Rekuperationskapazität des Austauschers und dadurch an die erforderliche Rekuperationsleistung angepasst ist. Überaus vereinfacht wird die Lüftungseinrichtung dann, wenn die Innenfläche der Luftleitung im Wesentlichen die Speicherfläche des Austauschers für die Rekuperation von Wärme und Luftfeuchte bildet, wobei die Speicherung wegen der Adsorptionseigenschaften von Wasserdampf und der Wärmeleitung und Wärmespeicherung und wegen der Dauer der Be- und Entladevorgänge an der Oberfläche und im oberflächennahen Bereich der Luftleitung stattfindet.

Für die Wirksamkeit einer Lüftungseinrichtung ist erforderlich, dass der Ventilator für eine Luftleitung an den Rekuperationszyklus angepasst, zur Belüftung mit Frischluft, eingeschaltet ist.

Es ist überdies notwendig, den Ventilator in der Förderrichtung umschaltbar einzurichten und an den Rekuperationszyklus angepasst umzuschalten.

Für die rekuperative Wärmerückgewinnung mit hoher Ausbeute, ist es notwendig, dass der Ventilator einer Luftleitung mit Temperatursensoren auf die Speicherkapazität des Wärmeaustauschers eingestellt ist, von denen einer an der Öffnung nach außen und einer an der Lüftungsöffnung des zugeordneten Raumes angebracht ist, mit deren Hilfe die Regelung des Rekuperationszyklus sehr genau möglich ist.

Bei der Laufzeit des Ventilators einer Luftleitung in eine Förderrichtung muss sichergestellt sein, dass das Volumen der in der Luftleitung befindlichen Luft ausgetauscht wird, bevor eine Änderung der Förderrichtung erfolgt, was durch die Einstellung der Steuerung des Ventilators erreicht wird. In der praktischen Anwendung sollte deshalb das Verhältnis von "Totvolumen" der Luftleitung zum "Austauschvolumen" wenigstens 1 zu 2 und vorteilhafter Weise mehr als das betragen um einen einwandfreien Luftwechsel herzustellen.

Die Laufzeit des Ventilators in einer Förderrichtung sollte gleichzeitig 3 bis 4 Minuten nicht unterschreiten, auch um dem hinreichenden Austausch von Wärme und/oder Feuchte zeitlich zu ermöglichen.

Für die Anpassung des Lüftungsbedarfs und des Rekuperationszyklus an einen bestimmten Raum oder eine bestimmte Raumgruppe besteht eine einfache und wirksame Lösung darin, je eine Luftleitung an je diesen Raum oder diese Raumgruppe über eine Luftöffnung anzuschließen.

Eine besonders wirksame Regelung der Rekuperation ist möglich, wenn an einer Luftleitung und besonders an deren Ende, d.h. an deren nach außen liegenden Öffnung, ein Ventilator angebracht ist, jeweils für beide Förderrichtungen der Luft oder einer für jede Förderrichtung angeordnet ist.

Eine bevorzugte Anordnung für eine besonders wirksame Lüftung und Rekuperation besteht in der Anwendung von zwei Lüftleitungen, die jeweils an eine Luftöffnung des zugeordneten Raumes oder der zugeordneten Raumgruppe angeschlossen sind, wobei es besonders vorteilhaft ist, wenn eine Luftleitung über Dach und die andere Luftleitung in das Kellergeschoss und vorzüglich aus diesem ins Freie, geführt ist, die dann beide in einem Lüftungsstrang aneinandergereiht sind.

Zur Steigerung der Aufladungsgeschwindigkeit von Innenflächen der Luftleitungen für Wärme und Luftfeuchte ist es günstig, diese mit einem Material hoher spezifischer Wärmeleitung und hoher spezifischer Feuchtespeicherung auszukleiden und solche mit zusätzlich aktivierbarer möglichst hoher Wärmekapazität und/oder Feuchteadsorption zu beschichten oder die Luftleitungen aus diesen Materialien herzustellen, weil die Wärmespeicherung wegen der Aufladezeiten auf eine geringe Wanddicke an der Innenfläche der Luftleitung beschränkt bleibt, während die Speicherung der Luftfeuchte unter den gleichen Bedingungen an und in einer noch geringeren Schichtdicke erfolgt.

Vor allem bei einer Luftleitung, die für einen erforderlichen Wärmeaustausch in einem darstellbaren Rekuperationszyklus zu kurz ist oder um die Zykluszeit zu verringern, ist es angemessen einen zusätzlichen Austauscher für Wärme und oder auch Luftfeuchte anzuwenden.

Für diesen Anwendungsbereich ist es, auch wegen der Anbringung und Wartung, günstig, den zusätzlichen Austauscher jeweils am äußeren Ende der Luftleitung über Dach, an deren Öffnung nach außen zu liegend oder in der Luftleitung im Kellergeschoss innen, möglichst unmittelbar vor deren Öffnung nach außen anzubringen. Der Austauscher soll dabei, zur Niedrighaltung des Förderdruckes der Luft, aus pneumatisch gut durchgängigem Material bestehen. Zur Anwendung können von Kieselsteinen oder durchgängig geformten Keramikmaterial bis zu Styroporformlingen oder Kohlestücken oder dergleichen kommen.

Die Anordnung des Austauschers möglichst über seine gesamte Länge oder wenigstens über einen erheblichen Teil in der Luftleitung nach innen zu reichend, ergibt eine geschützte Anordnung und erspart zusätzliche Vorkehrungen für die Anbringung.

Um die Austauschfläche zu vergrößern und damit den Rekuperationsumfang zu erhöhen, ist es vorteilhaft die innere Oberfläche einer Luftleitung zumindest zum Teil mit einem vergrößernden Profil, von der Öffnung am äußeren Ende der Luftleitung her, zu versehen.

Zur Regelung der zeitintervalle der Rekuperationszyklen ist es von Vorteil, die Steuerung des Ventilators einer Luftleitung mit thermischen Sensoren vorzunehmen, die an der Öffnung nach außen und an der Luftöffnung in den belüfteten Raum angeordnet sind.

Zwei Ausführungsbeispiele der Erfindung werden nachstehend an Hand der Zeichnung beschrieben.

Es zeigt:

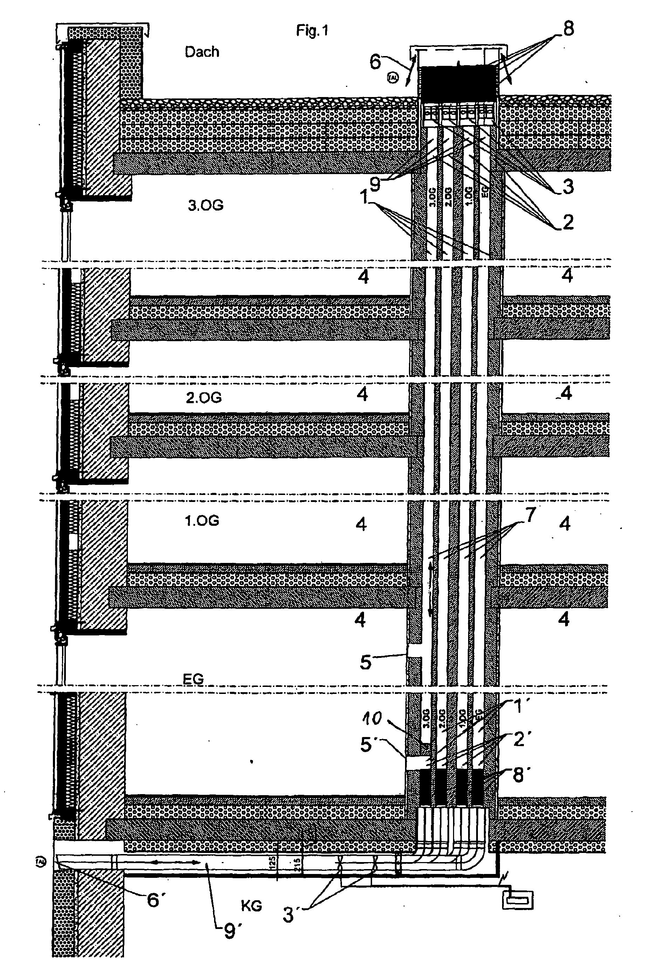

- Fig. 1: einen Vertikalschnitt durch ein Wohnhaus mit Kellergeschoss und 4 Wohngeschossen, mit einer Niedrigtemperatur-Außenwanddämung und vier zusammengefassten Lüftungsssträngen 7 mit jeweils zwei zugeordneten Luftleitungen 1, 1', mit einzeln zugeordneten Ventilatoren, jedes Geschoss waagrecht abgeschnitten, schematisch;

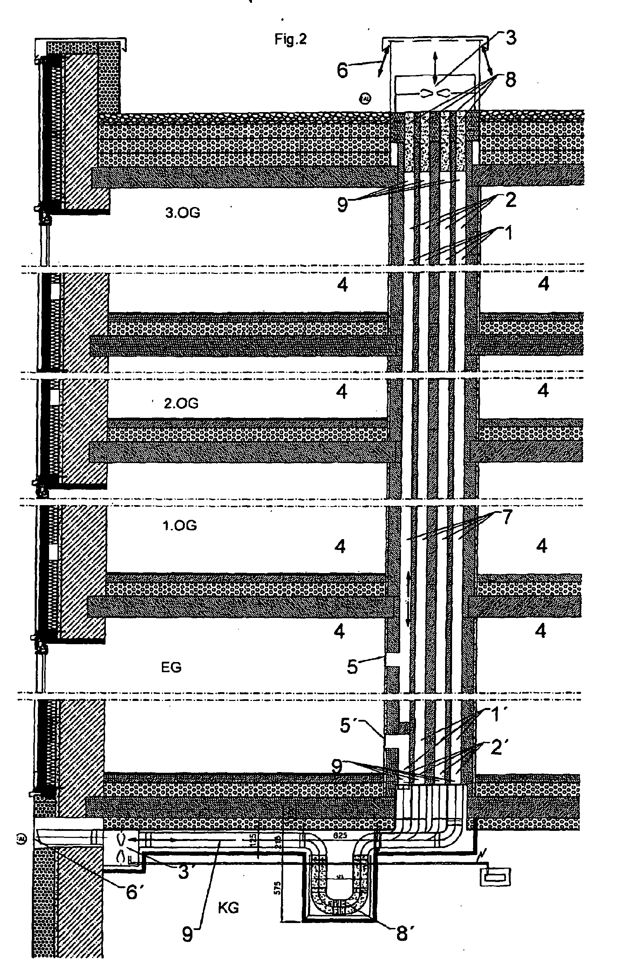

- Fig. 2: einen Vertikalschnitt durch ein Wohnhaus mit Kellergeschoss und 4 Wohngeschossen, mit einer Niedrigtemperatur-Außenwanddämung und vier zusammengefassten Lüftungsssträngen 7 mit jeweils zwei zugeordneten Luftleitungen 1, 1', mit je einem Ventilator für alle Luftleitungen 1 und je einem Ventilator für alle Luftleitungen 1', schematisch.

In Fig. 1 sind vier Lüftungsstränge 7 zusammengefasst und jeder besteht aus zwei Luftleitungen 1, 1', die durch abtrennen der Verbindung im Lüftungsstrang 7 im Bereich des zugeordneten belüfteten Raumes 4 gebildet werden und jeweils mit einer Luftöffnung 5 für die Luftleitung 1 über Dach und mit einer Luftöffnung 5' für die Luftleitung 1' ins Kellergeschoss verbunden sind.

Die über Dach geführte Luftleitung 1 endet dort mit einer Öffnung 6, an der ein Ventilator 3 angebracht ist, nach dem nach außen zu noch ein zusätzlicher Austauscher 8 angeordnet ist, wobei diese Austauscher gemeinsam mit einer Abdeckung gegen Wettereinwirkung geschützt sind.

Die ins Kellergeschoss geführte Luftleitung 1' wird zunächst über einen zusätzlichen Austauscher 8' geleitet und dann durch das Kellergeschoss, in dem der Ventilator 3' in der Luftleitung 1' eingesetzt ist, nach außen und endet mit der Öffnung 6' an der Außenmauer.

In die Luftleitung 1 über Dach ist ein Sensor 9 für die Temperatur und/oder zusätzlich (nicht dargestellt) für die Luftfeuchte unmittelbar vor dem Ventilator 3 eingesetzt.

In die Luftleitung 1' ins Kellergeschoss ist ein Sensor 9' nach dem Ventilator 3' eingesetzt.

Die Sensoren 9 und 9' geben die Steuersignale bei Erreichen einer einstellbaren Maximaltemperatur und/oder Maximalfeuchte an eine Regelvorrichtung für die Umsteuerung der Förderrichtung der Ventilatoren mit der die Rekuperationszyklen geregelt werden.

Bei der in Fig. 2 gezeigten Anordnung sind alle Einzelheiten gleich wie beim Vertikalschnitt des Wohnhauses in Fig. 1, mit folgenden Ausnahmen:
Der zusätzliche Austauscher 8 ist in die Luftleitung 1 vor deren Öffnung 6 eingesetzt und als Stein-Austauscher dargestellt; der zusätzliche Austauscher 8' in der Luftleitung 1' ist in einem Doppelbogen im Kellergeschoss, ebenfalls als Stein-Austauscher angeordnet.

Über Dach ist ein Ventilator 3 gemeinsam für alle vier Luftleitungen 1 an deren Öffnungen 6 aufgesetzt und abgedeckt.

Im Kellergeschoss liegt ein Ventilator 3' für alle vier Luftleitungen 1' unmittelbar vor denen Öffnungen 6' an der Innenseite der Außenmauer des Gebäudes.

### Bezugszeichenliste

- 1: Luftleitung der Lüftungseinrichtung über Dach
- 1': Luftleitung der Lüftungseinrichtung ins Kellergeschoss
- 2: Austauscher für Wärme und Luftfeuchte in der Luftleitung 1
- 2': Austauscher für Wärme und Luftfeuchte in der Luftleitung 1'
- 3: Ventilator der Luftleitung 1 über Dach
- 3': Ventilator der Luftleitung 1' ins Kellergeschoss
- 4: belüfteter Raum
- 5: Luftöffnung für die Luftleitung 1 in den Raum 4
- 5': Luftöffnung für die Luftleitung 1' in den Raum 4
- 6: Öffnung der Luftleitung 1 über Dach
- 6': Öffnung der Luftleitung 1' durch das Kellergeschoss
- 7: Lüftungsstrang der Luftleitung 1, 1' durchgehend von Kellergeschoss bis zum Dach
- 8, 8': zusätzlicher Austauscher der Luftleitung 1, 1'
- 9: Sensor an der Luftöffnung 6, 6' nach außen
- 9': Sensor an der Luftöffnung 5, 5' in den belüfteten Raum 4

## Patentansprüche

1. Lüftungseinrichtung für den Luftwechsel von Räumen (4), insbesondere von Bädern in Gebäuden, mit je zwei Luftleitungen (1, 1'), die an je einen Raum (4) oder je eine Raumgruppe über je eine Luftöffnung (5, 5') angeschlossen sind, die insbesondere aus einem einzigen, im Bereich des Raumes (4) oder der Raumgruppe liegenden und dort unterbrochenen, im Wesentlichen vertikal verlaufenden Lüftungsstrang (7) bestehen, wobei jede Luftleitung (1, 1') mit einer Rekuperationsanordnung versehen ist, die wenigstens einen Austauscher (2, 2') für Wärme und Luftfeuchte, und einen Ventilator (3, 3') umfasst, an dessen Rekuperationskapazität der Rekuperationszyklus und damit die Laufzeit des Ventilators (3, 3') an die erforderliche Rekuperationsleistung angepasst ist und wobei die Innenfläche der Luftleitung (1, 1'), im wesentlichen eine Speicherfläche des Austauschers (2, 2') für die Rekuperation von Wärme und Luftfeuchte bildet.

2. Lüftungseinrichtung nach Anspruch 1, **dadurch gekennzeichnet, dass** der Ventilator (3, 3') an den Rekuperationszyklus angepasst, zur Belüftung mit Frischluft, eingeschaltet ist.

3. Lüftungseinrichtung nach Anspruch 1 oder 2, **dadurch gekennzeichnet, dass** der Ventilator (3, 3') an den Rekuperationszyklus angepasst, in der Förderrichtung umschaltbar, eingerichtet ist.

4. Lüftungseinrichtung nach Anspruch 1, 2 oder 3, **dadurch gekennzeichnet, dass** der Ventilator (3, 3') angepasst an den Rekuperationszyklus, insbesondere mit Temperatursensoren (9, 9') auf die Speicherkapazität des Austauschers (2, 8, 8') einregelbar ist.

5. Lüftungseinrichtung nach Anspruch 1, **dadurch gekennzeichnet, dass** je eine Luftleitung (1, 1') an je einen Raum (4) oder je eine Raumgruppe über eine Luftöffnung (5, 5') angeschlossen ist.

6. Lüftungseinrichtung nach einem der Ansprüche 1 bis 5, **dadurch gekennzeichnet, dass** an einer Luftleitung (1, 1'), insbesondere am Ende an der nach außen liegenden Öffnung (6, 6'), wenigstens ein Ventilator (3, 3') angebracht ist.

7. Lüftungseinrichtung nach einem der Ansprüche 1 bis 6, **dadurch gekennzeichnet, dass** eine Luftleitung (1) über Dach und die andere Luftleitung (1') in das Kellergeschoss und insbesondere aus diesem ins Freie, geführt ist.

8. Lüftungseinrichtung nach einem der Ansprüche 1 bis 7, **dadurch gekennzeichnet, dass** die Innenfläche der Luftleitungen (1, 1') mit einem Material hoher spezifischer Wärmeleitung und aktivierbarer Wärmekapazität und/oder hoher spezifischer Feuchtespeicherung/Feuchteadsorption beschichtet ist oder aus diesem besteht.

9. Lüftungseinrichtung nach einem der Ansprüche 1 bis 8, **dadurch gekennzeichnet, dass** eine Luftleitung (1, 1') mit einem zusätzlichen Austauscher (8, 8') für Wärme und/oder Luftfeuchte versehen ist.

10. Lüftungseinrichtung nach Anspruch 9, **dadurch gekennzeichnet, dass** der zusätzliche Austauscher (8, 8') jeweils am äußeren Ende der Luftleitung (1) über Dach, an jeweils am äußeren Ende der Luftleitung (1) über Dach, an der Öffnung (6) nach außen liegend oder in der Luftleitung (1') im Kellergeschoss innen, vor deren Öffnung (6') nach außen angeordnet ist und insbesondere aus pneumatisch gut durchgängigem Steinmaterial oder dergleichen besteht.

11. Lüftungseinrichtung nach einem der Ansprüche 9 oder 10, **dadurch gekennzeichnet, dass** der Austauscher (8, 8') über die gesamte Länge oder wenigstens einen nach innen zu reichenden Teil der Luftleitung (1, 1') angebracht ist.

12. Lüftungseinrichtung nach einem der Ansprüche 1 bis 11, **dadurch gekennzeichnet, dass** die Luftleitung (1, 1'), wenigstens am äußeren Ende zur Öffnung (6, 6') hin, mit einem die innere Oberfläche vergrößernden Profil ausgebildet ist.

13. Lüftungseinrichtung nach einem der Ansprüche 1 bis 6, **dadurch gekennzeichnet, dass** der Ventilator (3, 3') einer Luftleitung (1, 1') über eine Steuerung, die mit thermischen Sensoren (9, 9'), an der Öffnung nach außen und an der Luftöffnung (5, 5') in den belüfteten Raum (4) angeordnet sind, zumindest nach den Zeitintervallen der Rekuperationszyklen geregelt ist.

## Claims

1. Ventilation device for the air exchange of rooms (4), in particular of baths in buildings, with two air ducts each (1, 1'), which are each connected to one room each (4) or one room group each via an air opening (5, 5') consisting in particular of a single ventilation conduit (7) which is located in the area of the room (4) or the room group and interrupted there and essentially vertically running, each air duct (1, 1) being equipped with a recuperation arrangement which comprises at least one exchanger (2, 2') for heat and air humidity as well as one ventilator (3,3'), to the recuperation capacity of said exchanger (2, 2') the recuperation cycle and consequently the run time of the ventilator (3, 3') is adapted to the required recuperation performance, and the interior surface of the air duct (1, 1'), essentially forming a storage area of the exchanger (2, 2') for the recuperation of heat and air humidity.

2. Ventilation device according to claim 1, **characterized in that** the ventilator (3, 3'), being adapted to the recuperation cycle, is switched on for ventilation using fresh air.

3. Ventilation device according to claim 1 or 2, **characterized in that** the ventilator (3, 3') being adapted to the recuperation cycle and switchable in the conveying direction, is set up.

4. Ventilation device according to claim 1, 2 or 3, **characterized in that** the ventilator (3, 3') being adapted to the recuperation cycle, is adjustable to the storage capacity of the exchanger (2, 8, 8') in particular using temperature sensors (9, 9').

5. Ventilation device according to claim 1, **characterized in that** one air duct each (1, 1') is connected to one room each (4) or to one room group each via an air opening (5, 5').

6. Ventilation device according to one of the claims 1 to 5, **characterized in that** at least one ventilator (3, 3') is attached at one each air duct (1, 1'), particularly at the end of the opening (6, 6') which is located on the outside.

7. Ventilation device according to one of the claims 1 to 6, **characterized in that** the one air duct (1) runs above roof level and the other air duct (1') runs to the basement and, in particular, from the basement to the open air.

8. Ventilation device according to one of the claims 1 to 7, **characterized in that** the interior surface of the air ducts (1, 1') is coated with a material of high specific thermal conductivity and activatable heat capacity and/or high specific moisture storage/moisture absorption or consists of such material.

9. Ventilation device according to one of the claims 1 to 8, **characterized in that** one air duct (1, 1') is equipped with an additional exchanger (8, 8') for heat and/or air humidity.

10. Ventilation device according to claim 9, **characterized in that** the additional exchanger (8, 8') is positioned at every outer end of the air duct (1) above roof level, at the opening (6) located on the outside or within the air duct (1') inside the basement, outwards in front of its opening (6') and, in particular, consists of pneumatically permeable stone material or the like.

11. Ventilation device according to one of the claims 9 or 10, **characterized in that** the exchanger (8, 8') is attached along the entire length or at least at an inward stretching part of the air duct which.

12. Ventilation device according to one of the claims 1 to 11, **characterized in that** the air duct (1, 1') is designed at least at the outer end towards the opening (6, 6') with a profile which enlarges the interior surface.

13. Ventilation device according to one of the claims 1 to 6, **characterized in that** the ventilator (3, 3') of an air duct (1, 1') is controlled via a control device at least according to the time intervals of the recuperation cycles and whose thermic sensors (9, 9') are arranged at the outward opening and at the air opening (5, 5') into the ventilated room (4)

## Revendications

1. Dispositif d'aération pour le changement d'air des pièces, (4) en particulier des bains dans des édifices, avec deux conduites d'air (1, 1'), étant chacune raccordée à une pièce chacune ou un groupe spatial chacun via un orifice d'aération (5, 5') qui sont composées, en particulier, d'un seul tuyau d'aération (7) situé dans la zone de la pièce (4) ou du groupe spatial et interrompu à cet endroit et essentiellement s'étendant vertical, chaque conduite d'air (1, 1') étant pourvue d'un dispositif de récupération qui contient au moins un échangeur (2, 2') pour la chaleur et l'humidité de l'air et un ventilateur (3, 3'), à la capacité de récupération de l'échangeur (2, 2') le cycle de récupération et ainsi la durée de marche du ventilateur (3, 3') sont adaptés à la puissance de récupération et la surface intérieure de la conduite d'air (1, 1') formant essentiellement une surface de stockage de l'échangeur (2, 2') pour la récupération de la chaleur et de l'humidité de l'air.

2. Dispositif d'aération selon la revendication 1, marqué par le fait que le ventilateur (3, 3'), adapté au cycle de récupération, est mis en marche pour la ventilation avec de l'air frais.

3. Dispositif d'aération selon la revendication 1 ou 2, marqué par le fait que le ventilateur (3, 3'), adapté au cycle de récupération et réversible dans le sens de l'alimentation, est mise en place.

4. Dispositif d'aération selon la revendication 1, 2 ou 3, marqué par le fait que le ventilateur (3, 3'), adapté au cycle de récupération, est ajustable sur la capacité de stockage de l'échangeur (2, 8, 8') en particulier en utilisant des capteurs de température.

5. Dispositif d'aération selon la revendication 1, marqué par le fait qu'une conduite d'air (1, 1') est raccordée à une pièce (4) chacune ou un groupe spatial chacun via un orifice d'aération (5, 5').

6. Dispositif d'aération selon l'une des revendications 1 jusqu'à 5, marqué par le fait qu'au moins un ventilateur (3, 3') est attaché à une conduite d'air (1, 1'), en particulier à la fin de l'orifice (6, 6') situé vers l'extérieur.

7. Dispositif d'aération selon l'une des revendications 1 jusqu'à 6, marqué par le fait qu'une conduite d'air (1) est menée au-dessus du toit et l'autre conduite d'air (1') au souterrain et, en particulier, du souterrain à l'extérieur.

8. Dispositif d'aération selon l'une des revendications 1 jusqu'à 7, marqué par le fait que la surface intérieure des conduites d'air (1, 1') est recouverte d'un matériel avec une bonne conductivité thermique spécifique et une capacité de chaleur activable et/ou une haute rétention de l'humidité/absorption de l'humidité spécifique ou est constituée d'un tel matériel.

9. Dispositif d'aération selon l'une des revendications 1 jusqu'à 8, marqué par le fait qu'une conduite d'air (1, 1) est pourvue d'un échangeur (8, 8') additionnel pour la chaleur et/ou l'humidité de l'air.

10. Dispositif d'aération selon la revendication 9, marqué par le fait que l'échangeur additionnel (8, 8') est placé à chaque extrémité extérieure de la conduite d'air (1) au-dessus du toit, à l'orifice (6) situé vers l'extérieur ou dans la conduite d'air (1) à l'intérieur du souterrain, devant leur orifice (6') vers l'extérieur et est constitué en particulier d'un matériel de pierre permeable pneumatique ou similaire.

11. Dispositif d'aération selon l'une des revendications 9 ou 10, marqué par le fait que l'échangeur (8, 8') est attaché sur toute la longueur ou au moins sur une partie de la conduite d'air (1, 1') s'étendant vers l'intérieur.

12. Dispositif d'aération selon les revendications 1 jusqu'à 11, marqué par le fait que la conduite d'air (1, 1'), est au moins sur l'extrémité extérieure vers l'orifice (6, 6') conçue comme un profil agrandissant la surface intérieure.

13. Dispositif d'aération selon l'une des revendications 1 jusqu'à 6, marqué par le fait que le ventilateur (3, 3') d'une conduite d'air (1, 1') est réglé via un dispositif de contrôle au moins selon les intervalles de temps des cycles de récupération et les capteurs thermiques (9, 9') duquel sont placés à l'orifice vers l'extérieur et à l'orifice d'aération (5, 5') dans la pièce aérée (4).
